# EUROPEAN PATENT APPLICATION

(11) **EP 4 691 233 A1**
(43) Date of publication of application: **11.02.2026**
(21) Application number: 24780545.0
(22) Date of filing: 27.03.2024
(51) Int. Cl.: A01K 29/00

(54) **METHOD AND DEVICE FOR IMPROVING PHYSIOLOGICAL STATE OF BRED ANIMAL USING PHOTOSTIMULATION**

(30) Priority: 31.03.2023 JP 2023058265
(71) Applicant: Tsubota Laboratory, Inc., Tokyo 160-8582 (JP); School Corporation, Azabu Veterinary Medicine Educational Institution, Sagamihara-shi, Kanagawa 252-5201 (JP)
(72) Inventor: MITSUKURA, Yasue, Tokyo 1608582 (JP); TSUBOTA, Kazuo, Tokyo 1608582 (JP); KIKUSUI,Takefumi, Sagamihara-shi, Kanagawa 252-5201 (JP); MIWA, Yukihiro, Iwakurashi, Aichi 4820043 (JP); KONDO, Shinichiro, Tokyo 1608582 (JP)
(74) Representative: Plasseraud IP
(86) International application number: PCT/JP2024/012459
(87) International publication number: WO 2024/204444

(57) **Abstract**

An object of the present invention is to provide a method for improving physiological state of domesticated animal, and an apparatus used for the same.

The present invention carries out an improvement in physiological state of a domesticated animal by irradiating a domesticated animal with light of a specific wavelength region such as violet light by making the light pulse at a specific blinking frequency, by using a light irradiating apparatus.

## Description

### Technical Field

The present invention relates to a method for improving physiological state of domesticated animal by light stimulation, and an apparatus used for the same, and more particularly, relates to a method for improving physiological state of domesticated animal by light stimulation in which light of a specific wavelength region such as violet light is continuously irradiated or pulsed at a specific frequency, and an apparatus used for the same.

### Background Art

Human beings domesticate a wide variety of animals for various purposes. Regarding domestication of animals by human beings, it is desirable for a physiological state of the animals to be favorable. Moreover, it is desirable to make the physiological state of these animals favorable by a simple method. However, there are few methods which improve the physiological state of domesticated animals, and while supplements for facilitating an improvement in brain function of aged cats and dogs are available in the market, an equipment for a similar purpose has not been developed yet. Moreover, an average life expectancy for both dogs and cats rose by one year (equivalent to about four years for human) as compared to that 10 years ago, and with this, the cost of medical care for aged pets has increased by 9 % for dogs and 6 % for cats as compared to that 10 years ago, and it is believed that QOL (Quality Of Life) of domesticated animals can be improved by improving the physiological state such as brain function of domesticated animals, and the cost of medical care of domesticated animals for the owners can be reduced, and improving the physiological state of domesticated animals by a simple method has been sought more strongly than ever before.

Inventors of the present invention have submitted an interesting report about effects of violet light on eyes, and in Patent Document 1 and Non-Patent Document 1 for instance, it has been proposed that light of a specific wavelength region is effective in preventing myopia and suppressing myopia, and with myopic population still on the rise globally in recent years, high expectations are placed. Moreover, it has been verified that violet light enhances the blood flow in brain and choroid coat. Effects of light on a human body have been studied from various perspectives in recent years, and reported on the basis of new findings. For instance, facts such as, circadian rhythm is improved by bathing in the sunlight (Non-Patent Document 1), and light irradiated from a display such as a liquid-crystal display in which LED (light emitting diode) lighting and LED is used as a backlight have a substantial effect on body and mind (Non-Patent Document 2) have been reported.

### Citation List

### Patent Documents

Patent Document 1: WO2015/186723A1

### Non-patent Documents

Non-Patent Document 1: Anti-aging Medicine by Megumi Hatori and Kazuo Tsubota, Japanese Society of Anti-aging Medicine Magazine Vol. 11, No. 3, 065 (385) - 072 (392), (2015)
Non-Patent Document 2: Blue Light Hazard by Kazuo Tsubota, Published by Shueisha on November 20, 2013

### Summary of the Invention

### Problems to be Solved by the Invention

One of the objectives of the present invention is to provide a method for improving physiological state of domesticated animal, and an apparatus for improving physiological state of domesticated animal.

### Means for Solving the Problems

The inventors of the present invention discovered that by irradiating light of a specific wavelength region, for example, to eyes of a domesticated animal it is possible to improve physiological state of the domesticated animal, and accomplished the present invention. In other words, the present disclosure provides a method for improving physiological state of domesticated animal by irradiating domesticated animal with light of a specific wavelength region. Preferably, the present disclosure provides a method for improving physiological state of domesticated animal by irradiating domesticated animal with violet light (VL) continuously or in pulses at a specific frequency.

Moreover, according to one aspect, the present disclosure provides a method for improving physiological state of domesticated animal by irradiating light of a specific wavelength region to a subject by controlling a light irradiating apparatus. According to some embodiments, the light irradiating apparatus includes a light source which is capable of irradiating domesticated animal with light of a specific wavelength region continuously or pulsed at a specific frequency, and a controller which controls irradiation of light from the light source, such as blinking frequency of the light source. Light of a specific wavelength region is irradiated to the subject by the light irradiating apparatus, and includes the method for improving physiological state of domesticated animal.

According to another aspect, the present disclosure provides a component which is built-in or attached to the apparatus or the instrument, and which is replaceable.

According to still another aspect, the present disclosure provides a method or a system for replacing, repairing, or carrying out maintenance of the apparatus, the instrument, or the component.

In other words, the present disclosure is as follows.

### [Item 1]

A method for improving physiological state of domesticated animal includes irradiating a domesticated animal with light of a specific wavelength region using a light irradiating apparatus.

### [Item 2]

The method according to item 1, wherein improving physiological state of a domesticated animal contributes to a purpose of rearing the domesticated animal.

### [Item 3]

The method according to item 1, wherein the improvement in physiological state of a domesticated animal is selected from a group consisting of prolongation of life span of a domesticated animal, an improvement in activity of a domesticated animal, an improvement in visual appearance of a domesticated animal, and an improvement in physiology of a domesticated animal.

### [Item 4]

The method according to item 3, wherein the prolongation of life spine of a domesticated animal is prolongation of life span of a domesticated animal in healthy condition.

### [Item 5]

The method according to item 3, wherein the improvement in activity of a domesticated animal is an improvement in amount or quality of the activity of a domesticated animal.

### [Item 6]

The method according to item 3, wherein the improvement in activity of a domesticated animal is selected from a group consisting of an improvement in walk of a domesticated animal, an improvement in activity during wakefulness of a domesticated animal, an improvement in activity during daytime of a domesticated animal, an improvement in activity during nighttime of a domesticated animal, an improvement in sleep of a domesticated animal, and an improvement in yield from a domesticated animal.

### [Item 7]

The method according to item 6, wherein the improvement in activity during wakefulness of a domesticated animal is an improvement in waking hours of a domesticated animal.

### [Item 8]

The method according to item 6, wherein the improvement in yield from a domesticated animal is an improvement in quantity or quality of yield from a domesticated animal.

### [Item 9]

The method according to item 6, wherein the yield from a domesticated animal is selected from a group consisting of a domesticated animal itself, progenies of a domesticated animal, eggs of a domesticated animal, and milk from a domesticated animal.

### [Item 10]

The method according to item 3, wherein the improvement in visual appearance of a domesticated animal is selected from a group consisting of an improvement in coat of hair of a domesticated animal, an improvement in coat color of a domesticated animal, and an improvement in behavior of a domesticated animal.

### [Item 11]

The method according to item 3, wherein the improvement in physiology of a domesticated animal is either an improvement in brain function of a domesticated animal or an improvement in digestive function of a domesticated animal.

### [Item 12]

The method according to item 1, wherein the irradiating apparatus includes a light source which is capable of irradiating a subject with light of a specific wavelength region continuously or at a specific blinking frequency, and a controller which controls irradiation of light by the light source.

### [Item 13]

The method according to item 1, wherein the light is violet light.

### [Item 14]

The method according to item 1, wherein the specific wavelength region includes a wavelength range of 360 nm to 400 nm.

### [Item 15]

The method according to item 1, wherein the specific wavelength region includes a wavelength of approximately 380 nm.

### [Item 16]

The method according to item 1, wherein the light is either irradiated continuously or made to pulse at a specific blinking frequency.

### [Item 17]

The method according to item 16, wherein the blinking frequency is in a range of 30 Hz to 150 Hz.

### [Item 18]

The method according to item 16, wherein the blinking frequency is in a range of 35 Hz to 60 Hz.

### [Item 19]

The method according to item 16, wherein the blinking frequency is 40 Hz.

### [Item 20]

The method according to item 1, wherein the light is irradiated during daytime.

### [Item 21]

The method according to item 1, wherein the light is irradiated for one hour or more.

### [Item 22]

The method according to item 1, wherein the light is irradiated such that an irradiance of light incident on eyes of a domesticated animal is within a range of 0.5 µW/cm² to 5000 µW/cm².

### [Item 23]

The method according to item 1, wherein the light is irradiated for one hour or more.

### [Item 24]

The method according to item 1, wherein the light irradiating apparatus is spectacles with a light source, a spectacle frame with a light source, or a goggle with a light source, a desktop light source, a mobile terminal mounted light source, a light source installed nearby or in front of face, a portable light source, an indoor lighting, a desk lamp, or a rearing machine with a light source.

### [Item 25]

An apparatus for improving physiological state of domesticated animal by irradiating a domesticated animal with light of a specific wavelength region.

### [Item 26]

The apparatus according to item 25, having
a light source which irradiates the light of a specific wavelength region,
wherein the light source irradiates light of a specific wavelength region continuously or at a specific blinking frequency.

### [Item 27]

The apparatus according to item 25, further having
a controller which controls emission of light.

### [Item 28]

The apparatus according to item 27, wherein the controller, by tranceiving to and from an isolated controller such as a portable terminal, carries out control by changing an irradiation condition selected from blinking frequency of the light of a specific wavelength region, irradiance, irradiation time, irradiation-start time, and irradiation-end time.

### [Item 29]

The apparatus according to item 25, having
a light source which irradiates the light of a specific wavelength region, and
a driving circuit which drives the light source.

### [Item 30]

The apparatus according to item 29, wherein the driving circuit includes at least one processor which is communicably connected to at least one memory and the light source, and at least one memory for storing commands executable by the processor.

### [Item 31]

The apparatus according to item 25, wherein the improvement in physiological state of a domesticated animal contributes to a purpose of rearing a domesticated animal.

### [Item 32]

The apparatus according to item 25, wherein the improvement in physiological state of a domesticated animal is selected from a group consisting of prolongation of life span of a domesticated animal, an improvement in activity of a domesticated animal, an improvement in visual appearance of a domesticated animal, and an improvement in physiology of a domesticated animal.

### [Item 33]

The apparatus according to item 32, wherein the prolongation of life span of a domesticated animal is prolongation of life span of a domesticated animal in healthy condition.

### [Item 34]

The apparatus according to item 32, wherein the improvement in activity of a domesticated animal is an improvement in amount or quality of the activity of a domesticated animal.

### [Item 35]

The apparatus according to item 32, wherein the improvement in activity of a domesticated animal is selected from a group consisting of an improvement in walk of a domesticated animal, an improvement in activity during wakefulness of a domesticated animal, an improvement in activity during daytime of a domesticated animal, an improvement in activity during nighttime of a domesticated animal, an improvement in sleep of a domesticated animal, and an improvement in yield from domesticated animal.

### [Item 36]

The apparatus according to item 35, wherein the improvement in the activity during wakefulness of a domesticated animal is an improvement in waking hours of a domesticated animal.

### [Item 37]

The apparatus according to item 35, wherein the improvement in yield from a domesticated animal is an improvement in quantity or quality of yield from a domesticated animal.

### [Item 38]

The apparatus according to item 35, wherein the yield from a domesticated animal is selected from a group consisting of a domesticated animal itself, progenies of a domesticated animal, eggs of a domesticated animal, and milk from a domesticated animal.

### [Item 39]

The apparatus according to item 32, wherein the improvement in visual appearance is selected from a group consisting of an improvement in coat of hair of a domesticated animal, an improvement in coat color of a domesticated animal, and an improvement in behavior of a domesticated animal.

### [Item 40]

The apparatus according to item 32, wherein the improvement in physiology of a domesticated animal is either an improvement in brain function of a domesticated animal or an improvement in digestive function of a domesticated animal.

### [Item 41]

The apparatus according to item 25, wherein the light is violet light.

### [Item 42]

The apparatus according to item 25, wherein the specific wavelength region includes a wavelength range of 360 nm to 400 nm.

### [Item 43]

The apparatus according to item 25, wherein the specific wavelength region includes a wavelength of approximately 380 nm.

### [Item 44]

The apparatus according to item 26, wherein the blinking frequency is in a range of 30 Hz to 150 Hz.

### [Item 45]

The apparatus according to item 26, wherein the blinking frequency is in a range of 35 Hz to 60 Hz.

### [Item 46]

The apparatus according to item 26, wherein the blinking frequency is 40 Hz.

### [Item 47]

The apparatus according to item 25, wherein the light is irradiated during daytime.

### [Item 48]

The apparatus according to item 25, wherein the light is irradiated for one hour or more.

### [Item 49]

The apparatus according to item 25, wherein the light is irradiated such that an irradiance of light incident on eyes of a domesticated animal is within a range of 0.5 µW/cm² to 5000 µW/cm².

### [Item 50]

The apparatus according to item 25, wherein the light is irradiated for one hour or more.

### [Item 51]

The apparatus according to item 25, wherein the apparatus is spectacles with a light source, a spectacle frame with a light source, or a goggle with a light source, a desktop light source, a mobile terminal-mounted light source, a light source installed nearby or in front of face, a portable light source, an indoor lighting, a desk lamp, or a rearing machine with a light source.

### [Item 52]

The apparatus according to item 25, wherein light of other wavelength region, sound, vibrations, magnetic field, or electric field are applied in addition, together with irradiation of the light of a specific wavelength region.

### [Item 53]

A computer-readable medium which is a non-transitory computer-readable medium having commands stored therein, and which is capable of causing an apparatus including a light source which irradiates a domesticated animal with light of a specific wavelength region continuously or at a specific blinking frequency and a controller which controls the blinking frequency of the light source, to execute the following steps when a command is executed by a processor,
a step of operating the apparatus such that the controller controls the blinking frequency of the light source to 0 Hz or to a frequency in a range of 30 Hz to 150 Hz, and
a step of operating the apparatus such that the light source irradiates a domesticated animal with light of a wavelength region in a range of 360 nm to 400 nm.

### [Item 54]

An instrument for improving physiological state of domesticated animal by light stimulation, including
a glass, a spectacle lens, or a contact lens which allows violet light to pass through.

### [Item 55]

A component which is built-in or attached to an apparatus according to item 25, and which is replaceable.

### [Item 56]

A component which is built-in or attached to an instrument according to item 54, and which is replaceable.

### [Item 57]

A system which replaces, repairs, or carries out maintenance of an apparatus according to item 25.

### [Item 58]

A system which replaces, repairs, or carries out maintenance of an instrument according to item 54.

### [Item 59]

A system which replaces, repairs, or carries out maintenance of a component according to item 55 or item 56.

### [Item 60]

A method for replacing, repairing, or carrying out maintenance of an apparatus according to item 25.

### [Item 61]

A method for replacing, repairing, or carrying out maintenance of an instrument according to item 54.

### [Item 62]

A method for replacing, repairing, or carrying of maintenance of a component according to item 55 or item 56.

### Brief Description of the Drawings

Fig. 1 is an example of violet light spectacles configured to irradiate
   violet light;
Fig. 2 is a graph showing a relationship of wavelength and spectral irradiance of violet fluorescent light;
Fig. 3 is a light spectrum of an LED with a peak wavelength of 375 nm;
Fig. 4 is a block diagram of an embodiment of an apparatus for controlling biological function according to the present invention;
Fig. 5 is a graph showing a comparison of waking hours of a dog after receiving irradiation of violet light with waking hours of a dog before receiving irradiation;
Fig. 6 is a graph showing a comparison of an amount of walk of a dog after receiving irradiation of violet light with an amount of walk of a dog before receiving irradiation;
Fig. 7 is a diagram showing a schedule for cognitive function evaluation, medical examination, and ophthalmologic examination before and after irradiating violet light carried out in example 4;
Fig. 8 is a diagram showing evaluation items used for evaluation of cognitive function carried out in example 4;
Fig. 9 is a diagram showing evaluation items used for evaluation of cognitive function carried out in example 4;
Fig. 10 is a graph showing an increase in amount of activity during daytime, during a period of irradiation of violet light;
Fig. 11 is a graph showing a decrease in amount of activity during nighttime, during a period of irradiation of violet light;
Fig. 12 is a graph showing a decrease in cognitive dysfunction syndrome score during the period of irradiation of violet light, in which, figures in three to four digits on a horizontal axis indicate a day of measurement, for example, 716 indicates July 16^{th};
Fig. 13 is a graph showing a decrease in cognitive dysfunction syndrome score during the period of irradiation of light, in which, figures in three to four digits on a horizontal axis indicate a day of measurement, for example, 716 indicates July 16^{th}. and
Fig. 14 is a graph showing a decrease in cognitive dysfunction syndrome score during the period of irradiation of light, in which, figures in three to four digits on a horizontal axis indicate a day of measurement, for example, 716 indicates July (7^{th} month) 16^{th}.

### Mode for Carrying Out the Invention

Examples of an improvement in physiological state of a domesticated animal according to the present disclosure include improvements which contribute to the purpose of rearing a domesticated animal. The purpose of rearing a domesticated animal includes, apart from the yield from the domesticated animals, petting animals. Term 'yield' in the present specification refers to a profitable product generated by a certain thing (domesticated animal). Examples of yield from a domesticated animal include for example, a domesticated animal itself, progenies of a domesticated animal, eggs of a domesticated animal, milk from a domesticated animal, and the like. When the yield from a domesticated animal is that domesticated animal itself, the domesticated animal is a domesticated animal for food.

The improvement in physiological state of a domesticated animal according to the present disclosure includes prolongation of life span of a domesticated animal, an improvement in activity of a domesticated animal, an improvement in visual appearance of a domesticated animal, an improvement in physiology of a domesticated animal, and the like.

The prolongation of life span of a domesticated animal includes, apart from prolongation of duration of life, prolongation of life span of a domesticated animal in healthy condition. The prolongation of life span of a domesticated animal is not evident from only the actual life span of the domesticated animal, but becomes evident by a comparison with an average actual life span for a group of domesticated animals to which that domesticated animal belongs.

The improvement in activity of a domesticated animal includes, apart from an improvement in amount of activity of a domesticated animal, an improvement in quality of activity of a domesticated animal. The improvement in amount of activity in a domesticated animal includes, for example, an amount of activity in animals that deviates from an amount of activity in healthy domesticated animals, bringing them closer to the amount of activity in healthy domesticated animals, and the like. Domesticated animals having the amount of activity deviated as compared to that for a healthy domesticated animal include domesticated animals in which the amount of activity is lesser as compared to that for a healthy domesticated animal. In a case in which the improvement in amount of activity of the domesticated animal can be expressed in terms of a numerical value, the improvement in the amount of activity becomes evident from a change in the numerical value. The amount of activity can be measured by using a commercially available activity meter for animal such as PLUS CYCLE (Japan Animal Referral Medical Center Inc., Japan). The improvement in quality of activity of a domesticated animal includes, for example, a mode of activity in animals that deviates from the mode of activity in healthy domesticated animals, bringing them closer to the mode of activity in healthy domesticated animals. Moreover, the improvement in quality of activity of a domesticated animal includes for example, an improvement in quality for the purpose of rearing domesticated animals, in the activity of the domesticated animal. In a case in which, the purpose of rearing a domesticated animal is yield from the domesticated animal, the improvement in quality for the purpose of rearing a domesticated animal includes an improvement in quantity or quality of the yield. In a case in which, the purpose of rearing a domesticated animal is petting, the improvement in quality for the purpose of rearing a domesticated animal in the activity of the domesticated animal includes an improvement in quality of behavior such as vivaciousness, lovableness, cuteness, and the like.

The improvement in activity of a domesticated animal includes for example, an improvement in walk of a domesticated animal, an improvement in activity during wakefulness of a domesticated animal, an improvement in activity during daytime of a domesticated animal, an improvement in activity during nighttime of a domesticated animal, an improvement in sleep of a domesticated animal, an improvement in yield from a domesticated animal, and the like.

The improvement in walk of a domesticated animal includes for example, an improvement in frequency of walk of a domesticated animal, an improvement in distance of walk of a domesticated animal, an improvement in mode of walk of a domesticated animal, and the like. The d improvement in walk by a domesticated animal includes, for example, the frequency, distance, or mode of walk in a domesticated animal that deviates from the frequency, distance, or mode of walk for a healthy domesticated animal, bringing them closer to the frequency of walk for the healthy domesticated animal. The domesticated animals having the frequency, distance, or mode of walk deviated from that of a healthy domesticated animal include domesticated animals for which the frequency, distance, or mode of walk were inadequate as compared to the frequency, distance, or mode of walk for the healthy domesticated animals. Domesticated animals for which the frequency, distance, or mode of walk is inadequate as compared to the frequency, distance, or mode of walk for the healthy domesticated animal include aged domesticated animals, and the like.

The improvement in activity during wakefulness of domesticated animals includes for example, an improvement in waking hours, apart from an improvement in amount of activity during wakefulness of a domesticated animal and an improvement in quality of activity during wakefulness of a domesticated animal, and the like.

The improvement in amount of activity during wakefulness in a domesticated animal includes, for example, an amount of activity during wakefulness in a domesticated animal during wakefulness that deviates from the amount of activity during wakefulness of a healthy domesticated animal, bringing them closer to the amount of activity during wakefulness of the healthy domesticated animal. The domesticated animals having the amount of activity during wakefulness deviated as compared to the amount of activity of the healthy domesticated animals include domesticated animals for which the amount of activity during wakefulness is inadequate as compared to the amount of activity during wakefulness of the healthy domesticated animals. Domesticated animals for which the amount of activity during wakefulness is inadequate as compared to the amount of activity during wakefulness of the healthy domesticated animals include aged domesticated animals, and the like. In a case in which the improvement in amount of activity during wakefulness of a domesticated animal can be expressed in terms of a numerical value for example, the improvement in amount of activity during wakefulness of the domesticated animal becomes evident from a change in the numerical value.

The improvement in quality of activity during wakefulness of a domesticated animal includes, for example, a mode of activity during wakefulness of a domesticated animal during wakefulness that deviates from the mode of activity during wakefulness of a healthy domesticated animal, bringing them closer to the mode of activity during wakefulness of the healthy domesticated animal. Moreover, the improvement in quality of activity during wakefulness of a domesticated animal includes for example, an improvement in quality for the purpose of rearing a domesticated animal, in the activity during wakefulness of a domesticated animal. In a case in which, the purpose of rearing a domesticated animal is petting, the improvement in quality for the purpose of rearing a domesticated animal in the activity during wakefulness of a domesticated animal includes an improvement in quality of behavior such as vivaciousness during wakefulness, lovableness during wakefulness, cuteness during wakefulness, and the like.

The improvement in waking hours of a domesticated animal includes, the waking hours of a domesticated animal that deviates from the waking hours of a healthy domesticated animal, bringing them closer to the waking hours of the healthy domesticated animal. The domesticated animals having the waking hours deviated as compared to the waking hours of the healthy domesticated animal include domesticated animals in which the waking hours are shorter as compared to waking hours of the healthy domesticated animals. The domesticated animals for which the waking hours are shorter than the waking hours of the healthy domesticated animals include for example, aged domesticated animals, and the like.

The improvement in activity during daytime of a domesticated animal includes for example, an improvement in amount of activity during daytime of a domesticated animal, an improvement in quality of activity during daytime of a domesticated animal, and the like.

The improvement in amount of activity during daytime of a domesticated animal includes, for example, the amount of activity during daytime of a domesticated animal that deviates from the amount of activity during daytime of a healthy domesticated animal, bringing them closer to the amount of activity during daytime of the healthy domesticated animal, and the like. The domesticated animals having the amount of activity during daytime deviated as compared to the amount of activity during daytime of the healthy domesticated animals include for example, domesticated animals for which the amount of activity during daytime is inadequate as compared to the amount of activity during daytime of the healthy domesticated animals. The domesticated animals for which the amount of activity during daytime is inadequate as compared to the amount of activity during daytime of the healthy domesticated animals include for example, aged domesticated animals, and the like. In a case in which, the improvement in amount of activity during day time of a domesticated animal can be expressed in terms of a numerical value, the improvement in amount of activity during day time of the domesticated animals becomes evident from a change in the numerical value.

The improvement in quality of activity during daytime of a domesticated animal includes, for example, the mode of activity during daytime of a domesticated animal that deviates from the mode of activity during daytime of a healthy domesticated animal, bringing them closer to the mode of activity during daytime of the healthy domesticated animal, and the like. Moreover, the improvement in quality of activity during daytime of a domesticated animal includes for example, an improvement in quality for a purpose of rearing a domesticated animal in the activity during daytime of a domesticated animal, and the like. In a case in which, the purpose of rearing a domesticated animal is petting, the improvement in quality for the purpose of rearing a domesticated animal in the activity during daytime of a domesticated animal includes for example, an improvement in quality of behavior during daytime such as vivaciousness during daytime, ease of feeding during daytime, ease of managing excretory behavior during daytime, lovableness during daytime, cuteness during daytime, and the like.

The improvement in activity during nighttime of a domesticated animal includes for example, an improvement in amount of activity during nighttime of a domesticated animal, an improvement in quality of activity during nighttime of a domesticated animal, and the like.

The improvement in amount of activity during nighttime of a domesticated animal includes, for example, the amount of activity during nighttime of a domesticated animal that deviates from the amount of activity during nighttime of a healthy domesticated animal, bringing them closer to the amount of activity during nighttime of the healthy domesticated animal, and the like. The domesticated animals having the amount of activity during nighttime deviated as compared to the amount of activity during night time of the healthy domesticated animal include for example, domesticated animals for which the amount of activity during nighttime is excessive as compared to the amount of activity during nighttime for the healthy domesticated animals. The domesticated animals for which the amount of activity during nighttime is excessive as compared to the amount of activity during nighttime for the healthy domesticated animal include for example, aged domesticated animals, and the like. In a case in which the activity can be expressed in terms of a numerical value, the improvement in amount of activity during nighttime of a domesticated animal becomes evident from a change in the numerical value.

The improvement in quality of activity during nighttime of a domesticated animal includes, for example, the mode of activity during nighttime of a domesticated animal that deviates from the mode of activity during nighttime of a healthy domesticated animal, bringing them closer to the mode of activity during nighttime of the healthy domesticated animal, and the like. Moreover, the improvement in quality of activity during nighttime of a domesticated animal includes for example, an improvement in quality for a purpose of rearing domesticated animals, in the activity during nighttime of a domesticated animal, and the like. In a case in which, the purpose of rearing domesticated animals is petting, the improvement in quality for the purpose of rearing domesticated animals in the activity during nighttime of a domesticated animal includes for example, improvement in quality of activity during nighttime such as calmness during nighttime, suppression of unnecessary barking during nighttime, suppression of prowling during nighttime, improvement in inappropriate excretory behavior, and the like.

The improvement in sleep of a domesticated animal includes for example, an improvement in amount of sleep of a domesticated animal, an improvement in quality of sleep of a domesticated animal, an improvement in activity during sleep of a domesticated animal, and the like.

The improvement in amount of sleep of a domesticated animal includes, for example, the amount of sleep of a domesticated animal that deviates from the amount of sleep of a healthy domesticated animal, bringing them closer to the amount of sleep of the healthy domesticated animal. The domesticated animals having the amount of sleep deviated from the amount of sleep of the healthy domesticated animals include for example, domesticated animals for which the amount of sleep is either excessive or inadequate as compared to the amount of sleep for the healthy domesticated animal. The domesticated animals for which the amount of sleep is excessive or inadequate as compared to the amount of sleep of the healthy domesticated animal include for example, aged domesticated animals, and the like. In a case in which the amount of sleep can be expressed in terms of a numerical value, the improvement in amount of sleep of a domesticated animal becomes evident from a change in the numerical value.

The improvement in quality of sleep of a domesticated animal includes, for example, the mode of sleep of a domesticated animal that deviates from the mode of sleep of a healthy domesticated animal, bringing them closer to the mode of sleep of the healthy domesticated animal, and the like. The domesticated animals having the mode of sleep deviated from the mode of sleep of the healthy domesticated animals include for example, domesticated animals for which the mode of sleep is degraded as compared to the mode of sleep of the healthy domesticated animal. The domesticated animals for which the mode of sleep is degraded as compared to the mode of sleep of the healthy domesticated animal include for example, domesticated animals for which the amount of activity during sleep is excessive, aged domesticated animals, and the like. In a case in which the quality of sleep can be expressed in terms of a numerical value, the improvement in quality of sleep of a domesticated animal becomes evident from a change in the numerical value.

The improvement in amount of activity during sleep of a domesticated animal includes for example, an improvement in amount of activity during sleep of a domesticated animal, an improvement in quality of activity during sleep of a domesticated animal, and the like.

The improvement in amount of activity during sleep of a domesticated animal includes, for example, the amount of activity during sleep of a domesticated animal that deviates from the amount of activity during sleep of a healthy domesticated animal bringing them closer to the amount of activity during sleep of the healthy domesticated animal. The domesticated animals having the amount of activity during sleep deviated from the amount of activity during sleep of the healthy domesticated animals include for example, domesticated animals for which the amount of activity during sleep is excessive as compared to the amount of activity during sleep of the healthy domesticated animal. The domesticated animals having the amount of activity during sleep excessive as compared to the amount of activity during sleep include aged domesticated animals. In a case in which the amount of activity during sleep can be expressed in terms of a numerical value, the improvement in amount of activity during sleep of a domesticated animal becomes evident from a change in the numerical value.

The improvement in quality of activity during sleep of a domesticated animal includes, for example the mode of activity during sleep of a domesticated animal that deviates from the mode of activity during sleep of a healthy domesticated animal, bringing them closer to the mode of activity during sleep of the healthy domesticated animal. The domesticated animals having the mode of activity during sleep deviated from the mode of activity during sleep for the healthy domesticated animal include for example, domesticated animals for which the mode of activity during sleep is degraded as compared to the mode of activity during sleep of the healthy domesticated animal. The domesticated animals for which the mode of activity during sleep is degraded as compared to the mode of activity during sleep of the healthy domesticated animals include for example, aged domesticated animals, and the like. In a case in which the quality of activity during sleep can be expressed in terms of a numerical value, the improvement in quality of activity during sleep of a domesticated animal becomes evident from a change in the numerical value.

The improvement in yield from a domesticated animal includes for example, an improvement in quantity or quality of yield produced by a domesticated animal. The improvement in quantity and quality of yield produced by a domesticated animal becomes evident, for example, by comparing with the previous quantity and quality of yield produced by the domesticated animal. Moreover, the improvement in quantity or quality of yield produced by a domesticated animal becomes evident, for example, by comparing an average of quantity or quality of aggregation of yield produced by a group of domesticated animals to which the domesticated animal belongs. Furthermore, the improvement in quality of yield produced by a domesticated animal includes for example, an improvement in quality for a purpose of rearing the domesticated animal. Here, the purpose of rearing the domesticated animals is not based on a subjectivity of a specific person rearing the domesticated animals, but is a general and abstract purpose of a person rearing that group of domesticated animals to which the domesticated animal belongs. The improved yield from a domesticated animal, apart from the domesticated animal itself, includes for example progenies of a domesticated animal, eggs of a domesticated animal, milk from a domesticated animal, and the like. When the improved yield from the domesticated animal is that domesticated animal itself, the domesticated animal is a domesticated animal for food for example.

The improvement in visual appearance of a domesticated animal includes for example, an improvement in coat of hair of a domesticated animal, an improvement in coat color of a domesticated animal, an improvement in behavior of a domesticated animal, and the like. The improvement in coat of hair, coat color, or behavior is for example, the coat of hair, coat color, or behavior of a domesticated animal nearing the coat of hair, coat color, or behavior of a healthy domesticated animal, when the coat of hair, coat color, or behavior of a domesticated animal have deviated from the coat of hair, coat color, or behavior of the healthy domesticated animal. These improvements are for a purpose of rearing the domesticated animal. In a case in which the purpose of rearing a domesticated animal is petting, the improvement in coat of hair of a domesticated animal is an improvement in coat of hair of a domesticated animal for the purpose of petting, the improvement in coat color of a domesticated animal is an improvement in coat color of a domesticated animal for the purpose of petting, and the improvement in behavior of a domesticated animal is an improvement in behavior of a domesticated animal for the purpose of petting. Here, the purpose of petting is not based on subjectivity of a specific person rearing the domesticated animal, but is a general and abstract purpose of a person rearing that group of domesticated animals to which the domesticated animal belongs.

The improvement in physiology of a domesticated animal includes improvements such as an improvement in brain function of a domesticated animal and an improvement in digestive function of a domesticated animal for example. The improvement in brain function of a domesticated animal includes, for example, the brain function of a domesticated animal that deviates from the brain function of a healthy animal bringing them closer to the brain function of the healthy domesticated animal. The brain function of a domesticated animal includes functions such as a cognitive function of a domesticated animal for example. The improvement in digestive function of a domesticated animal includes, for example, the digestive function of a domesticated animal that deviates from the digestive function of a healthy animal, bringing them closer to the digestive function of the healthy domesticated animal. The improvement in digestive function of a domesticated animal becomes evident from an improvement in quality of feces excreted from the domesticated animal for example.

The domesticated animals for which the physiological state is to be improved according to the present disclosure include animals to be reared and animals that should be reared, apart from animals that are being reared, and for the domesticated animals for which the physiological state is to be improved, it is not indispensable that those domesticated animals are actually being reared.

The domesticated animals for which the physiological state is to be improved include for example, invertebrate animals apart from vertebrate animals. Vertebrate animals include for example, fishes, amphibians, reptiles, birds, mammals, and the like. Mammals include animals such as dogs, cats, cows, pigs, sheep, goats, foxes, raccoon dogs, minks, ferrets, monkeys, pandas, rabbits, deer, horses, squirrels, guinea pigs, hamsters, dolphins, seals, and fur seals. Birds include birds such as chickens, quails, wild ducks, domestic ducks, pigeons, guinea hens, turkeys, parakeets, canaries, paddy birds, and lovebirds. Reptiles include animals such as turtles, soft-shelled turtles, lizards, house lizards, iguanas, and snakes. Amphibians include animals such as frogs, salamanders, and newts. Fishes include fishes such as farmed fish, tropical fish, and gold fish. Invertebrate animals include creatures such as mollusks, apart from insects, shellfish, arachnids, and myriapods. Domesticated animals for which the physiological state is to be improved according to the present disclosure include animals reared in facilities such as zoos, aquariums, farms, pastures, and agricultural farms.

The animals among the domesticated animals for which the physiological state is to be improved according to the present disclosure are animals having sensory organs which receive light as a stimulus, apart from animals not having sensory organs which receive light as a stimulus, and preferably are animals having sensory organs which receive light as a stimulus. Chemical compounds which receive light as a stimulus in sensory organs receiving light as a stimulus include proteins for example, and opsins such as neuropsin (Opn5) and rhodopsin. Moreover, sensory organs receiving light as a stimulus include for example, organs of vision such as eyes, photoreceptor cells, and visual cells, but not restricted to these and may include cells of central nervous system. The animals having sensory organs which receive light as a stimulus are animals having eyes not degenerated, apart from animals having degenerated eyes, and preferably, are animals having eyes not degenerated.

The animals among the domesticated animals for which the physiological state is improved according to the present disclosure are domesticated animals that are kept indoors. Since the domesticated animals kept indoors have lesser time to relish positive effects of violet light based on natural light, the improvement in physiological state by irradiating violet light intentionally becomes remarkable. Moreover, an eye level for domesticated animals reared indoors is preferably 140 cm or less, more preferably 100 cm or less, even more preferably 70 cm or less, even more preferably 40 cm or less, even more preferably 20 cm or less, and especially more preferably 10 cm or less. Because of the time to relish positive effects of violet light based on natural light irradiated through window becoming even lesser due to low eye level for domesticated animals reared indoors, the improvement in physiological state by irradiating violet light intentionally becomes even more remarkable.

The animals among the domesticated animals for which the physiological state is to be improved according to the present disclosure include for example, animals identified as having decreased motor function or decreased cognitive function, and preferably are animals identified as having decreased motor function and decreased cognitive function. Moreover, the animals among the domesticated animals for which the physiological state is to be improved according to the present disclosure include for example, aged animals which include for example, animals of age equivalent to 40 years or above, 50 years or above, 60 years or above, 70 years or above, 80 years or above, or 90 years of above for human.

According to some embodiments, a light irradiating apparatus includes a light source which is capable of irradiating a domesticated animal with light of a specific wavelength region continuously or at a specific blinking frequency, and a controller which controls the irradiation of the light source.

According to some embodiments, the light used is violet light.

According to some embodiments, the specific wavelength region used includes a wavelength range of 360 nm to 400 nm, and includes particularly a wavelength of approximately 380 nm.

According to some embodiments, the blinking frequency used may be 0 Hz or a frequency in a range of 30 Hz to 150 Hz, or more specifically, a frequency in a range of 30 Hz to 70 Hz, and particularly 0 Hz or a frequency in a range of 35 Hz to 60 Hz, and even more specifically 0 Hz or a frequency of approximately 40 Hz.

In some embodiment, irradiation conditions further include irradiation time of the light source. More specifically, the irradiation time includes irradiating for one hour or more.

According to some embodiments, the light is irradiated such that an irradiance of light incident on eyes of a domesticated animal is within a range of 0.5 µW/cm² to 1000 µW/cm².

According to some embodiments, the light sources include spectacles with a light source, a spectacle frame with a light source, or a goggle with a light source, a desktop light source, a mobile terminal mounted light source, a light source installed nearby or in front of face, a portable light source, and indoor lighting, a desk lamp, or a rearing machine with a light source.

The light sources include more preferably, spectacles with a light source, a spectacle frame with a light source, or a goggle with a light source, a desktop light source, a mobile terminal mounted light source, a light source installed nearby or in front of face, a portable light source, a desk lamp, or a rearing machine with a light source.

The light sources include even more preferably, spectacles with a light source, a spectacle frame with a light source, or a goggle with a light source, a desktop light source, a mobile terminal mounted light source, a light source installed nearby or in front of face, or a rearing machine with a light source.

The light sources include even more preferably, spectacles with a light source, a spectacle frame with a light source, or a goggle with a light source, a desktop light, or a rearing machine with a light source.

The light sources include most preferably spectacles with a light source, a spectacle frame with a light source, or a goggle with a light source, and a rearing machine with a light source.

The rearing machine is an equipment serving a purpose of rearing, and includes instruments such as lead, collar, torso ring, and harness for fixing a place of rearing, apart from apparatuses such as cage and water tank for fixing a location of rearing.

According to one aspect, the present disclosure is related to an apparatus for improving physiological state of domesticated animal by irradiating a domesticated animal with light of a specific wavelength region. More specifically, the present disclosure is related to an apparatus for improving physiological state of domesticated animal by light stimulation which has at least one light source which emits light and a driving circuit which drives the light source, and the light emitted by the light source is light of a specific wavelength region which produces an effect of improving physiological state of a domesticated animal by being irradiated to the domesticated animal.

Moreover, according to one aspect, the present disclosure is related to an apparatus for improving physiological state of domesticated animal which has at least one light source which emits light and a driving circuit which drives the light source, and which improves the physiological state of a domesticated animal by irradiating the domesticated animal with light emitted from the light source.

According to some embodiments, the driving circuit in the apparatus according to the present disclosure includes at least one processor which is communicably connected to at least one memory and the light source, and at least one memory for storing commands executable by the processor.

According to one aspect of the present invention, the present disclosure is related to a method of operating the apparatus according to the present disclosure which includes a light source which irradiates a domesticated animal with light of a specific wavelength region continuously or at a specific blinking frequency and a controller which controls the blinking frequency of the light source, which includes a step of controlling the blinking frequency of the light source to 0 Hz or to a frequency in a range of 30 Hz to 150 Hz, and more specifically, to a frequency in a range of 30 Hz to 75 Hz by the controller, and a step of irradiating to a domesticated animal with light of a wavelength region having a range of 360 nm to 400 nm by the light source.

According to one aspect of the present disclosure, the present disclosure is related to a computer program which causes an apparatus including a light source which irradiates a domesticated animal with light of a specific wavelength region continuously or at a specific blinking frequency and a controller which controls the blinking frequency of the light source to perform a method of operating according to the present disclosure.

In the method and apparatus according to the present disclosure, the light is violet light for example. According to the present invention, since it is possible to irradiate a domesticated animal with violet light of a wavelength outside the visible light region, it is possible to have an effect on the domesticated animal without feeling flickering or dazzling as in a case of white light. Moreover, the violet light is light of a wavelength in a range of 360 nm to 400 nm, and light of this wavelength has a low visible sensitivity as compared to the visible sensitivity of white light, and is light of a wavelength which imparts no uncomfortable feeling or hardly any uncomfortable feeling to a domesticated animal. Moreover, in the method and the apparatus according to the present disclosure, it is preferable to irradiate light during daytime.

According to some embodiments of the present disclosure, light of a wavelength in a range of 350 nm to 400 nm, such as light of one of wavelengths 350 nm, 360 nm, 370 nm, 380 nm, 390 nm, or 400 nm, or light of an arbitrary wavelength region included in a range stipulated by the arbitrary wavelength mentioned above (for example, in a range of 370 nm to 390 nm) may be used. In some embodiments of the present disclosure, a wavelength of approximately 380 nm is included. Moreover, the term 'approximately' used in the present specification indicates that it includes any value that is within a variation of up to ±5% of the value modified by this term. A peak wavelength for the light of a specific range of wavelength may have been included in the specific range, but not indispensably.

In the method and apparatus according to the present disclosure, the condition for irradiation of light is that the light is lit continuously (in other words, 0 Hz) or irradiated at a blinking frequency in a range of higher than 0 Hz up to 150 Hz.

According to some embodiments of the present disclosure, for the light which is irradiated continuously (0 Hz) or the light having a blinking frequency in the range of 30 Hz to 150 Hz, more specifically, a the light having a blinking frequency in a range of 30 Hz to 75 Hz, light blinking at any of the blinking frequencies 30 Hz, 35 Hz, 40 Hz, 45 Hz, 50 Hz, 55 Hz, 60 Hz, 65 Hz, 70 Hz, or 75 Hz, or light of an arbitrary blinking frequency included in a range stipulated by any of the abovementioned arbitrary blinking frequencies (for example, in a range of 35 Hz to 45 Hz), may be used. According to some embodiments of the present disclosure, the blinking frequency is approximately 40 Hz.

In the method and apparatus according to the present disclosure, the light can be irradiated so that the irradiance on the eyes of the domesticated animal is within a range of irradiance of 0.1 µW/cm² (0.001 W/m²) to 5000 µW/cm² (50 W/m²), or within a range of irradiance of 0.5 µW/cm² (0.005 W/m²) to 5000 µW/cm² (50 W/m²), or within a range of irradiance of 0.5 µW/cm² (0.005 W/m²) to 1000 µW/cm² (10 W/m²). Moreover, the irradiance of light incident on eyes of a subject may be in a range of 100 µW/cm² to 1000 µW/cm². According to some embodiments, by irradiating light such as violet light in the abovementioned range of irradiance, it is possible to have an effect on a domesticated animal. Even when the violet light in general, is a weak light of an extremely small amount (light with a weak optical sensitivity) in particular, it has been verified that a characteristic phenomenon may occur.

In the method and apparatus according to the present disclosure, the controller of the apparatus, by transceiving to and from an isolated controller such as a portable terminal, is capable of carrying out control by changing the irradiation conditions of light (including irradiating continuously or at a blinking frequency) such as irradiance, irradiation time, irradiation-start time, irradiation-end time, and irradiating continuously or at a blinking frequency. According to some embodiments, the abovementioned irradiation conditions being subjected to isolated control, it is possible to set arbitrary irradiation conditions appropriate for inducing improvement in physiological state of a domesticated animal, and to have the desired effect.

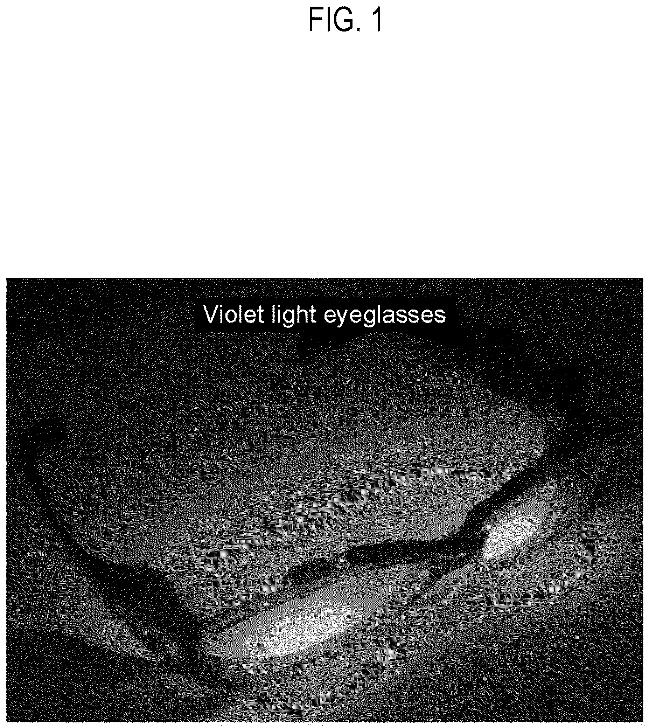

In the method and apparatus according to the present disclosure, the light source may be a light source installed nearby or in front of face, such as spectacles with a light source (for example, refer to Fig. 1), a spectacle frame with a light source, or a goggle with a light source, a desktop light source, and a mobile terminal mounted light source. According to some embodiments, as it is possible to irradiate specific light from the light source installed nearby or in front of face such as spectacles with a light source, spectacle frame with a light source, or a goggle with a light source that can be worn easily and have no uncomfortable feeling in daily use, they are highly practical, and are capable of irradiating light any time even in various situations and varied environments.

In the method and apparatus according to the present disclosure, the light source may be a non-mounting type light source such as a portable light source, or may be a mounting type light source such as an indoor lighting, a desk lamp, a dedicated device, or a rearing machine with a light source. According to some embodiments, it is possible to make it an apparatus in various forms of light source appropriate for an environment of usage. For instance, the light source may be used in combination with a glass, a spectacle lens, or a contact lens that allows violet light to pass through. Moreover, sunlight that has passed through a glass, a spectacle lens, or a contact lens that allow violet light to pass through, may be used as the light source.

A method by light stimulation according to the present disclosure is a method for improving physiological state of domesticated animal by irradiating domesticated animal with light of a specific wavelength continuously or at a specific blinking frequency, and is characterized by controlling emission of light by which the physiological state of the domesticated animal having received the light is improved.

An apparatus according to the present disclosure is an apparatus for improving physiological state of domesticated animal by irradiating a domesticated animal with violet light continuously, and is characterized by including a light source which emits the violet light and a light-emission time controller which makes irradiate the violet light at a specific time or for a specific period of time.

The present disclosure includes a component which is built-in or attached to an apparatus or an instrument, and which is replaceable. For instance, it is preferable that the apparatus or the instrument of the present disclosure is maintained at a certain degree of quality in order to carry out favorably the improvement in physiological state of a domesticated animal, and from a view point of maintaining the quality, it is preferable to carry out the necessary replacement of the components, and more preferably, to carry out the necessary replacement of the components periodically. The examples of component include, components such as the light source, the controller which controls the emission of light irradiated, peripheral equipment, and battery. More specifically, the components include components of which the performance and functioning are depleted with time, and include for example, components such as an LED (light emitting diode) element as a light source, driving circuit, memory, and lithium secondary battery as a battery.

Moreover, the present disclosure includes a maintenance method or a maintenance system for replacing, repairing or carrying out maintenance of the apparatus, the instrument, or the components that are replaceable. As mentioned above, it is preferable to maintain the apparatus or the instrument according to the present disclosure at a certain degree of quality all the time such that physiological state of a domesticated animal can be improved favorably. Therefore, it is preferable to carry out maintenance (checking of the apparatus or instrument), replacement of components, or repair, more preferably, the regular maintenance (checking of the apparatus or instrument), regular replacement of components, or regular repair of the apparatus or the instrument. The present disclosure includes a method for such maintenance, component replacement, and repair, and a system for carrying out the same, and more preferably, includes a method for regular maintenance, component replacement, and repair, and a system for carrying out the same. Such method includes a method in which sensors which detect state of each component in the apparatus or the instrument, and carries out the maintenance, component replacement, and repair according to result of detection by these sensors.

Furthermore, as it will be described below while referring to diagrams, according to some embodiments of the present disclosure, a method for improving physiological state of domesticated animal, an apparatus for improving physiological state of domesticated animal by light stimulation, a method of operating the apparatus, and a computer program which makes execute the method of operating are provided.

The method for improving physiological state of domesticated animal, the apparatus for improving physiological state of domesticated animal by light stimulation, a method of operating the apparatus, and the computer program which makes execute the method of operating will be described below while referring to diagrams. The present invention is not restricted to the following embodiments and examples, and include various modified examples and application examples which fall within the scope of the present invention.

### [Method for improving physiological state of domesticated animal]

The method for improving physiological state of domesticated animal according to the present disclosure is characterized by including irradiating a domesticated animal with light of a specific wavelength region. In the method for improving physiological state of domesticated animal according to the present disclosure, the domesticated animals and the improvements in physiological state are as aforementioned.

According to some embodiments of the method according to the present disclosure, the light used may be violet light. Moreover, according to some embodiments of the method according to the present disclosure, the specific wavelength used includes a wavelength in a range of 360 nm to 400 nm, and can particularly include a wavelength of approximately 380 nm. The blinking frequency for instance, may be 0 Hz or a frequency in a range of 30 Hz to 150 Hz, and more specifically a frequency in a range of 30 Hz to 70 Hz, and particularly 0 Hz or a frequency in a range of 35 Hz to 60 Hz. The blinking frequency in particular, may be 0 Hz or approximately 40 Hz. The irradiation conditions may further include an irradiation time of the light source. The light source may be spectacles with a light source, a spectacle frame with a light source, or a goggle with a light source, a desktop light source, for example, a desktop light, a mobile terminal mounted light source, a light source installed nearby or in front of face, a portable light source, an indoor lighting, a wall-mounted lighting, a ceiling light, a desk lamp, or a rearing machine with a light source, but is not restricted to these light sources.

According to some embodiments of the present disclosure, the specific time of irradiating light is an arbitrary time in a range of 10 seconds to 24 hours per day, and any time such as, 10 seconds, 30 seconds, 45 seconds, one minute, three minutes, five minutes, 10 minutes, 15 minutes, 30 minutes, 45 minutes, one hour, two hours, three hours, four hours, five hours, six hours, seven hours, eight hours, nine hours, 10 hours, 11 hours, 12 hours, 18 hours, and 24 hours, or may be an arbitrary time in a range stipulated by the abovementioned arbitrary time (for example, a range of one hour to 12 hours). A specific period of irradiating the light continuously may be for example, any of a period of one day, two days, three days, four days, five days, six days, one week, two weeks, three weeks, one month, two months, three months, four months, five months, six months, seven months, eight months, nine months, 10 months, 11 months, one year, two years, three years, four years, five years, six years, seven years, eight years, nine years, 10 years, and any period more than that, or may be an arbitrary period included in a range stipulated by the abovementioned arbitrary period (for example, a range of one week to one year). The total of time for which the light is irradiated during the specific period of continuous irradiation of light may be any of 10 seconds, 30 seconds, 45 seconds, one minute, three minutes, five minutes, 10 minutes, 15 minutes, 30 minutes, 45 minutes, one hour, two hours, three hours, four hours, five hours, six hours, seven hours, eight hours, nine hours, 10 hours, 11 hours, 12 hours, 18 hours, 24 hours, 50 hours, 100 hours, 200 hours, 300 hours, 400 hours, 500 hours, 600 hours, 700 hours, 800 hours, 900 hours, 1000 hours, 5000 hours, 10000 hours, 100000 hours, or may be an arbitrary time included in a range stipulated by the abovementioned arbitrary time (for example, a range of 100 hours to 300 hours).

According to some embodiments of the present disclosure, light such as light of a fluorescent lamp may be irradiated in addition to irradiating the light of a specific wavelength range. Color temperature of light irradiated by a lamp such as fluorescent lamp is in a range of 2600 Kelvin to 7100 Kelvin for example, and in a range of 4600 Kelvin to 5500 Kelvin. A time slot of irradiating light by a lamp such as fluorescent lamp is for example, 7 am to 9 pm, 8 am to 8 pm, and 9 am to 7 pm. Time of irradiating light by a lamp such as fluorescent lamp is for example, 9 hours to 15 hours per day, 10 hours to 14 hours per day, and 11 hours to 13 hours per day. Time of irradiating any of the light of a specific wavelength region and the light of a fluorescent lamp is for example one hour to five hours per day and two hours to four hours per day. Each day, the light from a lamp such as fluorescent lamp may be irradiated before irradiating the light of a specific wavelength region per day. Time of irradiating the light by a lamp such as fluorescent lamp before irradiating the light of a specific wavelength region per day is for example six hours to 12 hours, seven hours to 11 hours, and eight hours to 10 hours per day. Each day, the light of a lamp such as fluorescent lamp may be irradiated after finishing irradiation of the light of a specific wavelength range per day, and the light of a lamp such as fluorescent lamp may not be irradiated after finishing irradiation of the light of a specific wavelength range per day. Time of irradiating the light by a lamp such as fluorescent lamp after finishing irradiation of the light of a specific wavelength region per day is for example, 0 minutes to one hour, 0 minutes to 30 minutes, and 0 minutes to 15 minutes.

One aspect of the present disclosure is related to a method for improving physiological state of domesticated animal, which is a method including improving physiological state of a domesticated animal by controlling the light irradiating apparatus and irradiating a subject with light of a specific wavelength region. According to some embodiments, the light irradiating apparatus is capable of irradiating violet light. Moreover, according to some embodiments, the light irradiating apparatus is capable of irradiating light of a wavelength region having a range of 360 nm to 400 nm, and particularly, light of a wavelength region of approximately 380 nm. The blinking frequency of the light irradiating apparatus may be controllable to 0 Hz or to a frequency in a range of 30 Hz to 150 Hz, or more specifically, to a frequency in a range of 30 Hz to 70 Hz, and particularly to 0 Hz or to a frequency in a range of 35 Hz to 60 Hz, and the blinking frequency may be 0 Hz or approximately 40 Hz in particular. The light controlling apparatus may be an apparatus of which the irradiation time is controllable. Some embodiments of the light source may be spectacles with a light source, for example, a spectacle frame with a light source, or a goggle with a light source, a desktop light source, a mobile terminal mounted light source, a light source installed nearby or in front of face, a portable light source, an indoor lighting, a desk lamp, or a rearing machine with a light source.

### [Apparatus]

One aspect of the present disclosure is related to an apparatus for improving physiological state of domesticated animal by irradiating a domesticated animal with light of a specific wavelength region. More specifically, one aspect of the present disclosure is related to an apparatus for improving physiological state of domesticated animal by light stimulation. According to some embodiments, the apparatus for improving physiological state of domesticated animal according to the present disclosure may have at least one light source which emits light and a driving circuit which drives the light source. Here, the light emitted by the light source is light of a specific wavelength region which produces an effect of improving physiological state of a domesticated animal by being irradiated to the domesticated animal.

In the present specification, the apparatus for improving physiological state of domesticated animal by light stimulation is sometimes collectively referred to as 'apparatus for controlling biological function', or simply 'apparatus'.

According to some embodiments, the apparatus according to the present disclosure, as mentioned above, is an apparatus for improving physiological state of domesticated animal by irradiating a domesticated animal with violet light continuously or at a specific blinking frequency, and is characterized by including a light source which emits the violet light, a light-emission cycle controller which makes irradiate the violet light continuously or at a specific blinking frequency, and a light-emission time controller which makes irradiate the violet light at a specific time or for a specific period of time, and being an apparatus used for improving physiological state of a domesticated animal.

Moreover, the apparatus according to the present disclosure, in some embodiments, is an apparatus which controls physiological state of a domesticated animal by irradiating the domesticated animal with the violet light continuously, and is characterized by including a light source which emits the violet light and a light-emission time controller which makes irradiate the violet light at a specific time or for a specific period of time.

Moreover, the apparatus according to the present disclosure, in some embodiments, is related to an apparatus used for improving physiological state of domesticated animal by light stimulation which includes at least one light source which emits light, and a driving circuit which drives the light source, and the light emitted by the light source is light of a specific wavelength region which produces an effect by being irradiated to a domesticated animal. Therefore, one aspect of the present disclosure is related to an apparatus for improving physiological state of domesticated animal by light stimulation which is configured to include at least one light source which emits light and a driving circuit which drives the light source, and the driving circuit includes at least one processor which is communicably connected to the light source and at least one memory, and at least one memory for storing commands that are executable by the processor, and the light source emits light of a specific wavelength region which produces an effect of improving physiological state of a domesticated animal by being irradiated to the domesticated animal. Moreover, one aspect of the present disclosure is related to an apparatus for improving physiological state of domesticated animal by light stimulation which is configured to include at least one light source which emits light and a driving circuit which drives the light source, and the driving circuit includes at least one processor which is communicably connected to the light source and at least one memory, and at least one memory which is for storing commands that are executable by the processor, and the light source emits light of a specific wavelength region which produces an effect of improving physiological state of a domesticated animal by being irradiated to the domesticated animal.

### (Light source)

The wavelength of light emitted by the light source is not restricted in particular, and in some embodiments, violet light defined by a wavelength range of 360 nm to 400 nm is used.

A light source with a blinking frequency in a range of 0 Hz (continuously irradiated light) to 150 Hz can be used preferably. The frequency can be adjusted in units of 0.5 Hz and 1 Hz by setting the controller, and light of an arbitrary blinking frequency can be produced. As the blinking frequency is increased, there is an advantage that the blinking is not sensed any more, although this perception varies from individual to individual.

The irradiance of light incident on eyes of a domesticated animal from the light source may be variable or may be a constant value. Although irradiance with maximum output of 310 µW/cm² is used in some embodiments, it is not restricted to this value. The light source can be configured arbitrarily for irradiance in a range of 0.1 µW/cm² (0.001 W/m²) to 5000 µW/cm² (50 W/m²) for example, or irradiance in a range of 1 µW/cm² (0.01 W/m²) to 1000 µW/cm² (10 W/m²) for example, or irradiance in a range of 0.5 µW/cm² (0.005 W/m²) to 500 µW/cm² (5 W/m²) for example, or irradiance in a range of 0.5 µW/cm² to 1000 µW/cm². Moreover, the irradiance of light incident on eyes of a domesticated animal from the light source is 100 µW/cm² to 1000 µW/cm² for example. Furthermore, since a light source with such irradiance can be used easily for spectacles, spectacle frame, or goggle, and other portable irradiating apparatuses, it can be made to be worn even during rearing. Even with weak light of extremely small amount (light with weak optical intensity) in particular, an occurrence of a characteristic phenomenon has been verified, and an effect on various parts of a domesticated animal and an application in cell activity (used with a significance including gene expression control) can be anticipated.

Light may be specified in terms of relative luminosity. Since characteristics of the present invention can be realized even with a low relative luminosity, the violet light which generates stimulation in a domesticated animal can be irradiated while blinking at a low relative luminosity, and a desired site can be stimulated without strain on a domesticated animal.

It is preferable to set the irradiation time of light arbitrarily in accordance with the purpose thereof, and it may be a short time or a long time. The light can arbitrarily be irradiated intermittently (at regular interval or irregular interval) or continuously. In view of the fact that there is a strong possibility of the violet light having an effect on circadian rhythm, the time of irradiation of light can be set to be a time slot from 6 am to 6 pm, from 7am to 5 pm, from 8 am to 4 pm, from 9 am to 3 pm, or from 10 am to 2 pm for example, and the period of time can be set to be at least 10 minutes, at least 15 minutes, at least 20 minutes, at least 30 minutes, at least one hour, at least two hours, at least three hours, at least four hours, or at least five hours, and the period of time can be set to be five hours or less, four hours or less, or three hours or less. According to some embodiments, irradiation for a period of one hour to three hours, such as, from 6 am to 12 pm, from 7 am to 11 am, or from 8 am to 10 am is used. In a case of irradiation in which the time has been set in this manner, a timer function can be used. In the present specification, irradiating light for a predetermined time, in a case of not only irradiating light continuously but also when light is irradiated intermittently, also includes a case in which the total of the time for which the light is irradiated intermittently is the predetermined time. However, in a case in which, the light is light of a blinking frequency such as 150 Hz, the time of no irradiation as the cycle of blinking is to be deemed as the time for which the light is irradiated.

The light source may be spectacles with a light source, a spectacle frame with a light source, or a goggle with a light source. Such spectacles, spectacle frame, or goggle being easy to wear, and having a light source which emits light at a blinking frequency fitted to spectacles, spectacle frame, or goggle with no uncomfortable feeling on a daily basis, they are highly practical, and can be made to be worn continuously. Moreover, the light source may be a desktop light source, or a light source installed nearby or in front of face such as mobile terminal mounted light source, or a non-mounting type light source such as a portable light source, or may be a mounting type light source such as an indoor lighting, a desk lamp, and a dedicated device, or may be a rearing machine with a light source, or can be an apparatus in various forms of light source appropriate for an environment of usage.

### (Controller)

The controller is a section which controls irradiation conditions (irradiate continuously or at a blinking frequency) of light from the light source. The controller may be provided with an electric power source for supplying electric power to the light source, and such electric power source may be a battery, or may have a wire drawn to a battery installed at a different location. Moreover, in a case of being immovable at one location, it may be connected to a household electric power supply.

It is preferable that the controller, by tranceiving to and from an isolated controller such as a portable terminal, changes irradiation conditions of light such as blinking frequency, irradiance, irradiation time, irradiation-start time, and irradiation-end time. Since such controller carries out an isolated control of various irradiation conditions mentioned above, it is possible to have the desired effect by setting arbitrarily the irradiation conditions appropriate for controlling the desired biological function.

Furthermore, the controller may have controller functions and timer functions of the light source. The controller functions include functions such as making the frequency and irradiance variable, and setting the irradiation time. Moreover, the timer functions include an ability to set the irradiation time. Such controller functions and timer functions may have been provided integrally with the instrument, or may be provided as separate members.

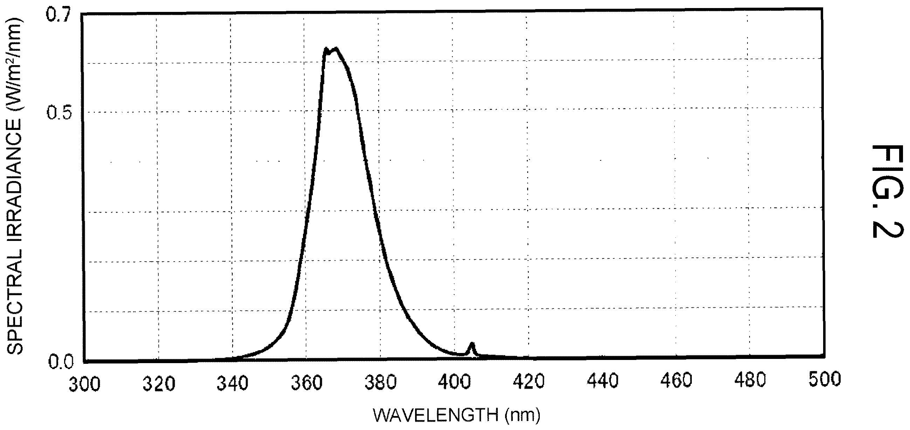

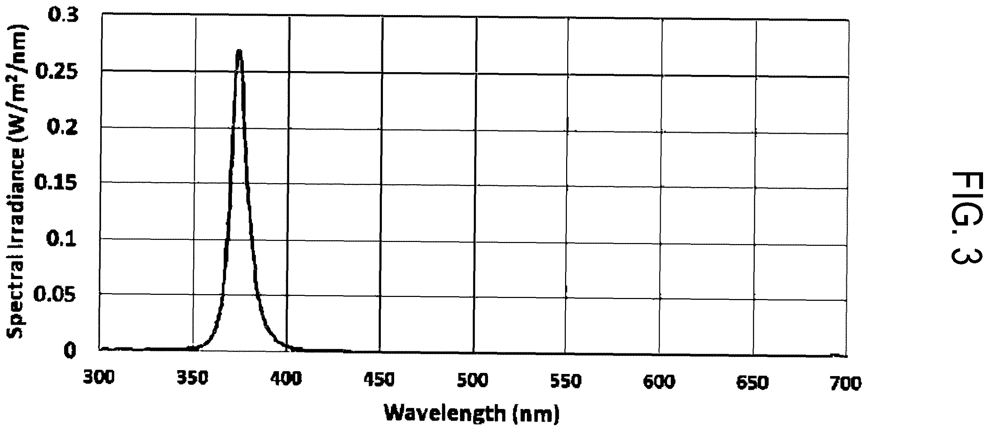

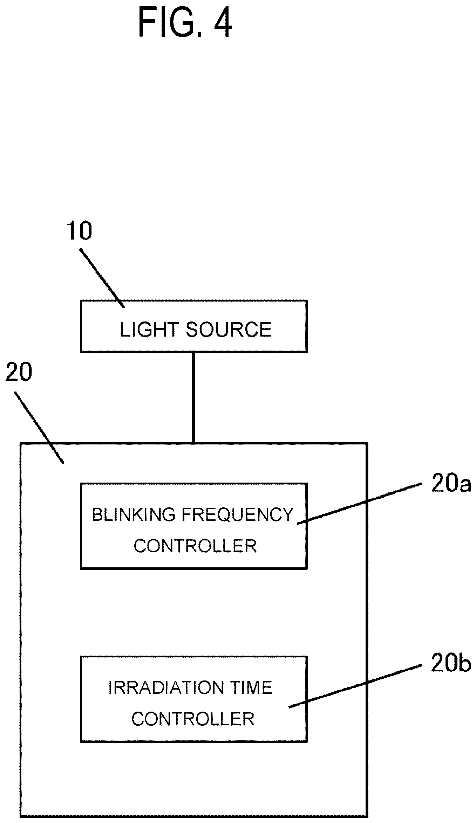

A block diagram of a simplified example of an apparatus which can be used for the control of biological functions as an embodiment of the apparatus according to the present disclosure is shown in Fig. 4. The apparatus shown in Fig. 4 may include various functions of the apparatus for improving physiological state of domesticated animal by light stimulation (these apparatuses can be collectively referred to as 'apparatus for controlling biological function') described in the present specification, and therefore, all the abovementioned apparatuses in the present specification can be represented by the block diagram in Fig. 4. The apparatus for controlling biological function can have a light source 10 and a controller 20. The light source 10 irradiates light of a specific wavelength region. It is preferable that a wavelength of light irradiated by the light source 10 includes VL (violet light) or light in a wavelength range of 360 nm to 400 nm described heretofore, and more preferably, includes light of a wavelength of 380 nm. The light source 10 may be an arbitrary light source, and a light emitting diode (LED) can be used preferably from viewpoints such as small size, long life, and ease of blinking control (refer to Fig. 2 for an example of a spectrum of violet fluorescent light and Fig. 3 for an example of a violet LED). The number of light sources 10 may be one or may be plural depending on factors such as an irradiance and an intended range of irradiation of the light source.

The controller 20 is connected to the light source 10 by a wired connection or a wireless connection, and is configured to control irradiation conditions of the light source 10. The irradiation conditions can include at least one of the blinking frequency and irradiation time of the light source 10, and therefore, the controller 20 can include at least one of a blinking frequency controller 20a and an irradiation time controller 20b. The blinking frequency may be preferably 0 Hz or a frequency in a range of 30 Hz to 150 Hz, more specifically, a frequency in a range of 30 Hz to 75 Hz, and more preferably 0 Hz or a frequency in a range of 35 Hz to 45 Hz, and even more preferably 0 Hz or 40 Hz. The blinking frequency of 0 Hz refers to continuously irradiated light. The irradiation time can be set arbitrarily in a range of 10 seconds to 24 hours per day for example, and a specific period of time for which the irradiation is to be continued can be set arbitrarily for a period of one day to few years, or more than that for example.

The controller 20 can include a processor such as a CPU (Central Processing Unit), and executes a processing of controlling irradiation conditions of the light source 10. The processing carried out by the controller 20 may be realized by a computer program or may be realized by hardware by a logic circuit. The computer program may be stored in a computer-readable recording medium. The recording medium having the computer program recorded may be a non-transient recording medium. The non-transient recording medium is not restricted in particular, and may be a recording medium such as a memory card and a CD-ROM (Compact Disc - Read Only Memory). The computer program stored in the recording medium can be installed in a computer unit via an appropriate reader. Examples of appropriate reader include a card reader in a case in which the recording medium is a memory card and a CD (Compact Disc) drive in a case in which the recording medium is a CD-ROM. Moreover, the computer program may be a computer program downloaded to a computer unit via a communication network from an external server.

In the apparatus according to the present disclosure, the driving circuit may include at least one processor which is communicably connected to the light source and at least one memory, and at least one memory for storing commands that are executable by the processor.

The light source 10 of the apparatus for controlling biological function shown in Fig. 4 may be spectacles with a light source, a spectacle frame with a light source, or a goggle with a light source, a desktop light source, a mobile terminal mounted light source, a light source installed nearby or in front of face, a portable light source, an indoor lighting, a desk lamp, or a rearing machine with a light source. Moreover, the apparatus for controlling biological function may be provided as a product with a light source having at least the light source 10 mounted thereon, out of the light source 10 and the controller 20, including spectacles, a spectacle frame, or a goggle, a desktop light, a mobile terminal, a case for mobile terminal, a head-worn article (such as cap, earphone headphone), a portable light, an indoor lighting, a desk lamp, or a rearing machine with a light source.

As described heretofore, the apparatus for controlling biological function by light stimulation according to the present disclosure, by irradiating a domesticated animal with light of a specific wavelength region such as violet light continuously or at a specific blinking frequency, can lead to the improvement in physiological state of the domesticated animal.

Moreover, one aspect of the present invention is related to a method of operating apparatus for controlling biological function by light stimulation. Therefore, some embodiments of the present disclosure are related to a method of operating apparatus which is used for controlling the biological function, or in other words, for improving physiological state of a domesticated animal, and the apparatus includes a light source which irradiates a domesticated animal with light of a specific wavelength region continuously or at a specific blinking frequency and a controller which controls the blinking frequency of the light source, and the apparatus irradiates a domesticated animal with light of a specific wavelength region continuously or at a specific blinking frequency. Here, the blinking frequency of the light source may be controlled to be 0 Hz or a to frequency in a range of 30 Hz to 150 Hz, more specifically, to a frequency in a range of 30 Hz to 75 Hz, and moreover, the light source may be a light source which irradiates a domesticated animal with light of a wavelength region having a range of 360 nm to 400 nm. In addition, one aspect of the present invention is related to a computer program which causes an apparatus including a light source which irradiates a domesticated animal with light of a specific wavelength region continuously or at a specific blinking frequency, and a controller which controls the blinking frequency of the light source, to execute the method of operating.

The computer program according to the present disclosure may have a command stored in a non-transitory computer readable medium. The computer program according to the present disclosure can execute predetermined steps when the command is executed by the processor. Therefore, one aspect of the present disclosure is related also to a computer-readable medium which is a non-transitory computer-readable medium having commands stored therein, and as the command is executed by a processor, it is capable of executing for an apparatus including a light source which irradiates a domesticated animal with light of a specific wavelength region continuously or at a specific blinking frequency, and a controller which controls the blinking frequency of the light source, a step of operating the apparatus to control the blinking frequency of the light source to be 0 Hz or to be a frequency in a range of 30 Hz to 150 Hz, more specifically, a frequency in a range of 30 Hz to 75 Hz by the controller, and a step of operating the apparatus such that the light source irradiates a domesticated animal with light of a wavelength region having a range of 360 nm to 400 nm.

Furthermore, one aspect of the present invention is related to an instrument for improving physiological state of domesticated animal by light stimulation, and the instrument may include a glass, a spectacle lens, or a contact lens which allows violet light to pass through. By using such instrument, it is possible to have a favorable effect on a domesticated animal such as improvement in physiological state of the domesticated animal. By using such instrument, the improvement of physiological state of a domesticated animal may be possible.

### [Component]

Furthermore, one aspect of the present invention is related to a component which is built-in or attached to the apparatus or the instrument, and is characterized by being replaceable. The examples of the component include components such as light source, controller which controls the emission of light irradiated, peripheral equipment, and battery.

### [Method or system for replacement, repair, and maintenance]

Furthermore, one aspect of the present invention is related to a method or system for replacing, repairing, or carrying out maintenance of the apparatus, instrument, or the component.

### Examples

### Example 1

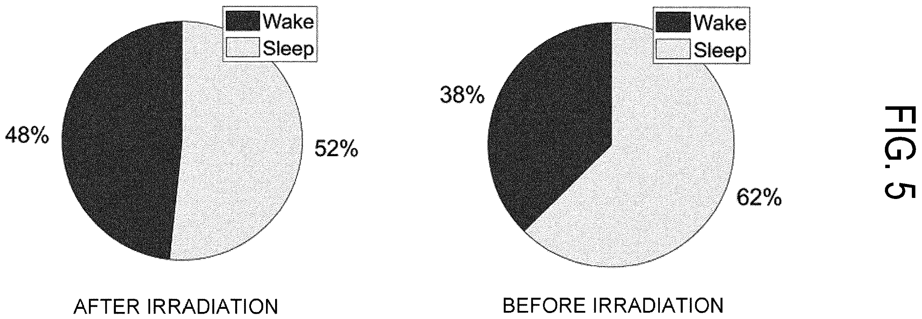

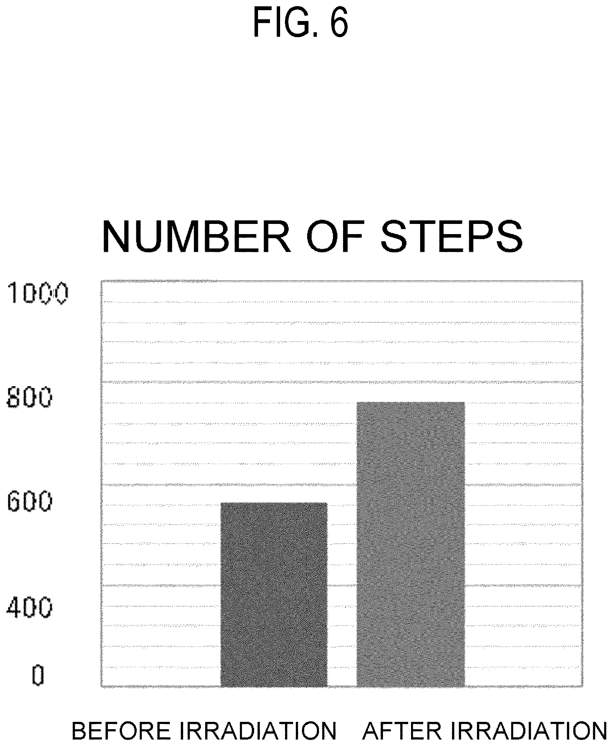

An apparatus in which a violet light LED (wavelength region 360 nm to 400 nm, irradiance 310 µW/cm², irradiates light continuously) is attached to eye glasses for pets was put on a 15-year-old small dog for two hours (in the morning before 12 pm) every day. In about three months after use of the eye glasses, the dog stopped sleeping during daytime, also started barking energetically, and there was an increase in activity as shown in Fig. 5 and Fig. 6. Moreover, there was an improvement in the quality of feces of the dog.

Fig. 5 shows a result when the duration of sleep of the dog between 9 am to 9 pm before and after the irradiation of violet light were compared. As shown in Fig. 5, the waking hours of the dog increased by the irradiation of violet light.

Fig. 6 shows result when the number of steps walked by the dog before and after the irradiation of violet light were compared. As shown in Fig. 6, the number of steps walked by the dog increased by the irradiation of violet light.

In the present example, although constant irradiation of violet light was used, irradiation of violet light blinking at a specific blinking frequency may be used and the optimization of the effect may be achieved.

### Example 2

A procedure similar to the procedure in Example 1 was carried out except for irradiating violet light at a blinking frequency in a range of 30 Hz to 150 Hz such as 40 Hz instead of irradiating the violet light LED continuously.

### Example 3

By using a spectroscope (Blue Wave manufactured by Stellar Net Co.), dependence of the intensity of outdoor light coming through a window glass on height was measured under the following conditions.

### Location of measurement:

- Inside a room on third floor above ground
- Window orientation: southeastward
- Height from flooring up to the lowest portion of window frame: 93 cm (wall from floor up to the lowest portion of window frame)
- Horizontal distance from window /wall up to a point of measurement: 100 cm Date and time of measurement:
- At around 4:30 pm on March 27, 2023

The measurement was carried out for a total of four patterns, two types of height of 150 cm (human eye level) and 30 cm (dog eye level) and two types of direction of measurement probe, one facing the window and the other facing opposite to the window (facing 180-degree opposite).

The intensity of light is an irradiance which is obtained as a value by integrating the spectral irradiance by the wavelength region (360 nm to 400 nm) of violet light.

The result of measurement is shown below.
1) Height 150 cm, facing the window: 6.6 µW/cm²
2) Height 150 cm, facing opposite to the window: 0 µW/cm²
3) Height 30 cm, facing the window: 0.01 µW/cm²
4) Height 30 cm, facing opposite to the window; 0 µW/cm²

From these measurement results, it was revealed that the window glass of the location of measurement is a type of glass that allows violet light to pass through, and at the human-eye level, the violet light incident on eyes through the window is a value other than 0 and at the dog-eye level, the violet light incident on eyes through the window is almost 0, which lead to a possibility that a dog kept indoors spending most of the time indoors, with that eye level, almost does not relish any positive effect of violet light daily, and the effect of irradiating violet light intentionally is remarkable, and may be more than the effect for human.

### Example 4.

### Material and method

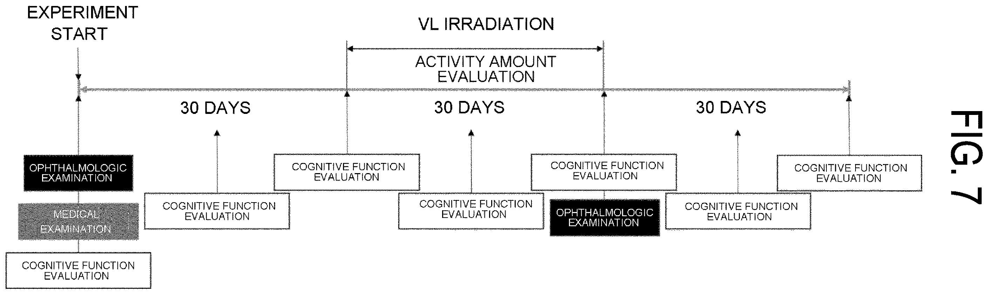

The subject was an aged dog expected to spend three months or more in animal care house, and identified to have a decreased motor function and a decreased cognitive function. The period for which the violet light was irradiated was 30 days, and violet light was irradiated for three hours per day (11:00 to 14:00) (wavelength region: 370 nm to 450 nm, peak wavelength 400 nm, irradiance: 361 µW/cm² average when the dog is facing an inner side of the cage). Violet light was irradiated from four directions, frontward, rearward, leftward, and rightward of cage in which the subject dog was kept. In accordance with Fig. 7, cognitive function evaluation once in two weeks, and medical examination and ophthalmologic examination before and after irradiating violet light were carried out during the experiment period.

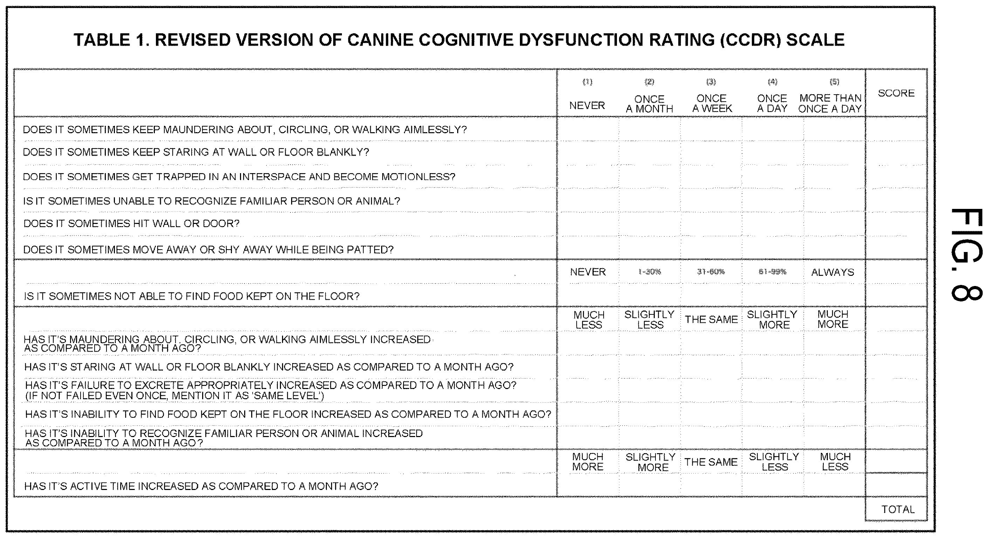

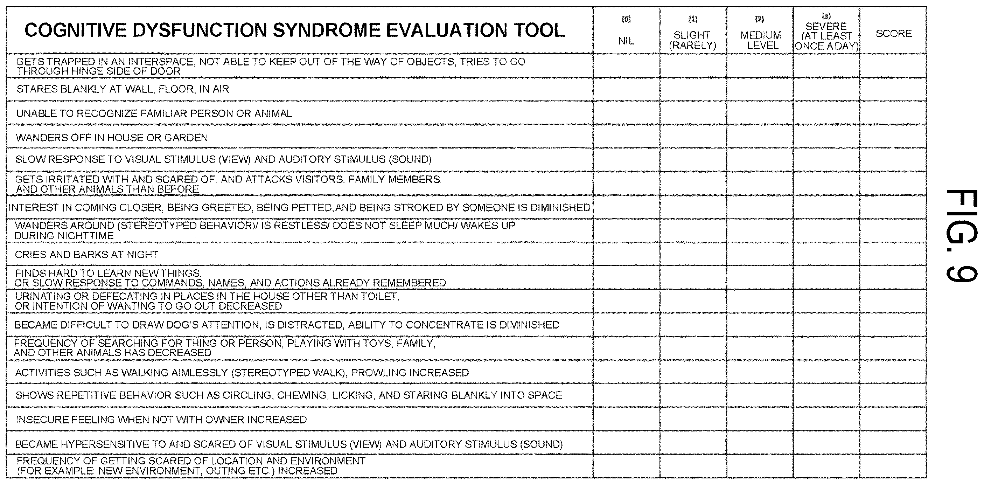

In the medical examination, measurement of body temperature/ heart rate/ respiration rate, measurement of body weight, listening heart sound, checking color of oral mucous membrane, and palpation of body surface lymphatic node/ abdominal region were carried out, in the ophthalmologic examination, evaluation of eyelid reflex/ threatening expression eyeblink response/ dazzle reflex/ light reflex, measurement of ocular pressure, fluorescein staining, Schirmer test, and examination of ocular fundus were carried out. The evaluation of cognitive function was made by using Fig. 8 and Fig. 9.

### Result

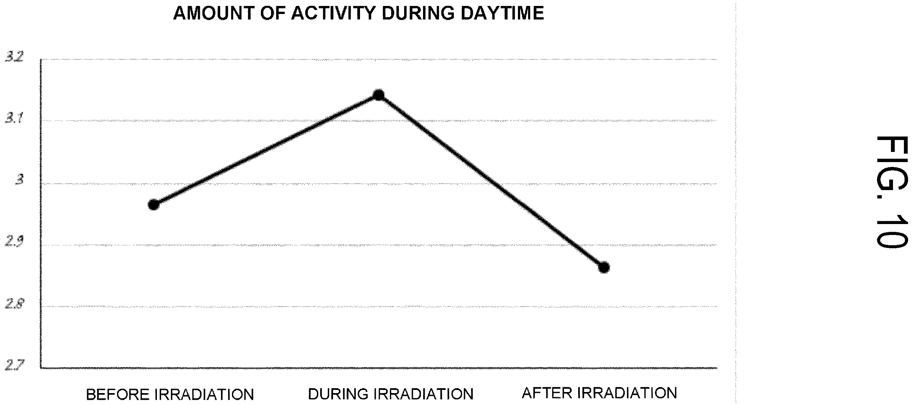

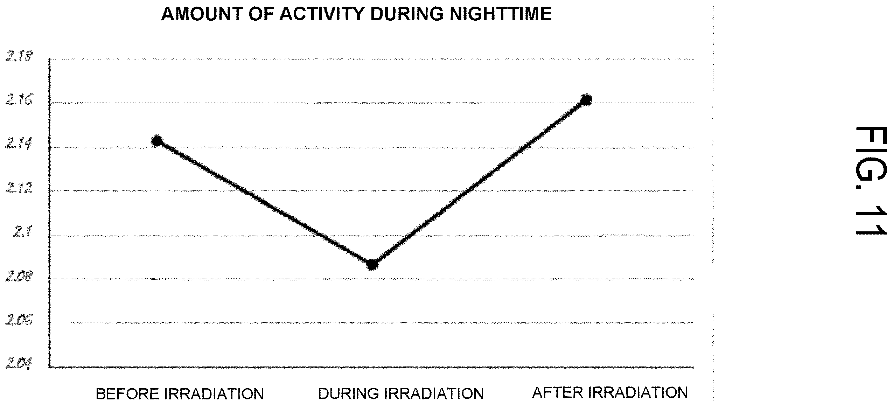

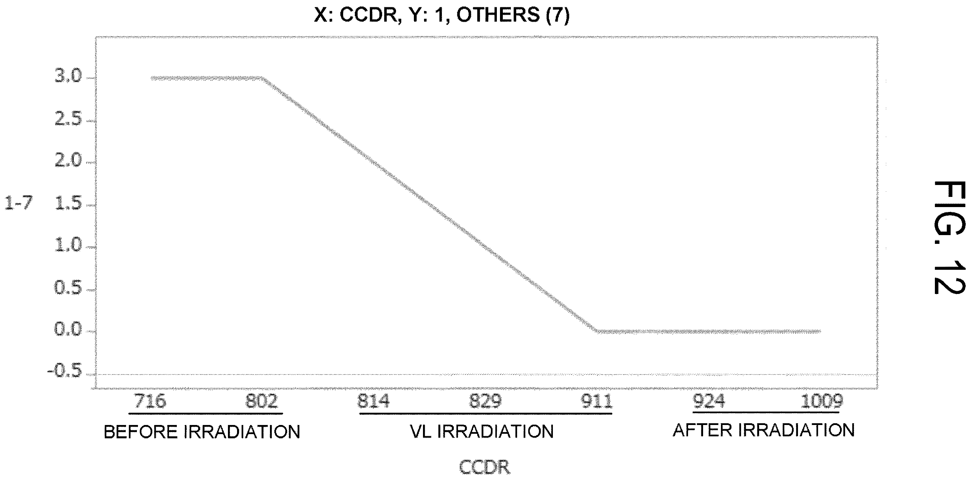

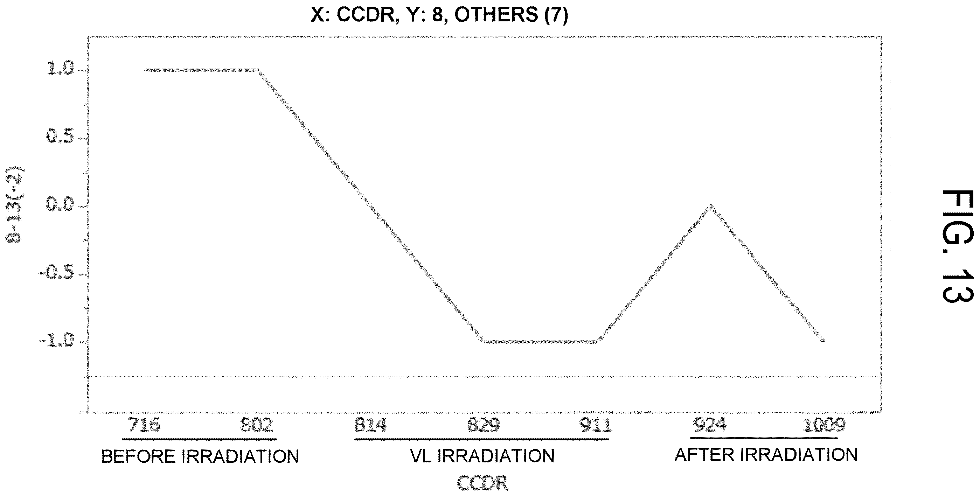

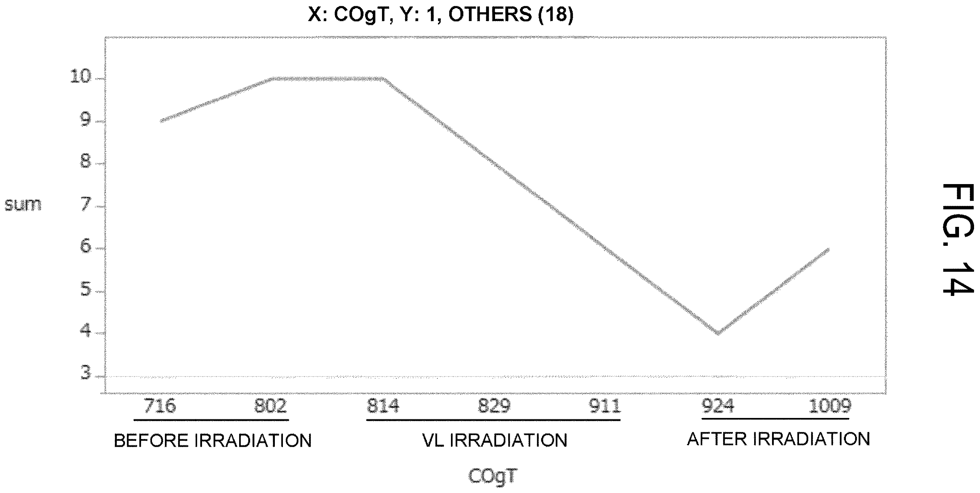

An increase in amount of activity during daytime and a decrease in amount of activity during nighttime during the period of violet light irradiation were identified (Fig. 10 and 11). Moreover, a decrease in cognitive dysfunction syndrome score during the period of violet light irradiation was identified (Fig. 12 to Fig. 14).

## Claims

1. A method for improving physiological state of domesticated animal, comprising:
irradiating a domesticated animal with light of a specific wavelength region by using a light irradiating apparatus.

2. The method according to claim 1, wherein an improvement in the physiological state of a domesticated animal contributes to a purpose of rearing the domesticated animal.

3. A method according to claim 1, wherein the improvement in physiological state of a domesticated animal is selected from a group consisting of prolongation of life span of a domesticated animal, an improvement in activity of a domesticated animal, an improvement in visual appearance of a domesticated animal, and an improvement in physiology of a domesticated animal.

4. The method according to claim 3, wherein the prolongation of life span of a domesticated animal is prolongation of life span of a domesticated animal in healthy condition.

5. The method according to claim 3, wherein the improvement in activity of a domesticated animal is an improvement in amount or quality of the activity of a domesticated animal.

6. The method according to claim 3, wherein the improvement in activity of a domesticated animal is selected from a group consisting of an improvement in walk of a domesticated animal, an improvement in activity during wakefulness of a domesticated animal, an improvement in activity during daytime of a domesticated animal, an improvement in activity during nighttime of a domesticated animal, an improvement in sleep of a domesticated animal, and an improvement in yield from a domesticated animal.

7. The method according to claim 6, wherein the improvement in activity during wakefulness of a domesticated animal is an improvement in waking hours of a domesticated animal.

8. The method according to claim 6, wherein the improvement in yield from a domesticated animal is an improvement in quantity or quality of yield from a domesticated animal.

9. The method according to claim 6, wherein the yield from a domesticated animal is selected from a group consisting of a domesticated animal itself, progenies of a domesticated animal, eggs of a domesticated animal, and milk from a domesticated animal.

10. The method according to claim 3, wherein the improvement in visual appearance of a domesticated animal is selected from a group consisting of an improvement in coat of hair of a domesticated animal, an improvement in coat color of a domesticated animal, and an improvement in behavior of a domesticated animal.

11. The method according to claim 3, wherein the improvement in physiology of a domesticated animal is either an improvement in brain function of a domesticated animal or an improvement in digestive function of a domesticated animal.

12. The method according to claim 1, wherein the light irradiating apparatus includes a light source which is capable of irradiating a subject with light of a specific wavelength region continuously or at a specific blinking frequency, and a controller which controls irradiation of light by the light source.

13. The method according to claim 1, wherein the light is violet light.

14. The method according to claim 1, wherein the specific wavelength region includes a wavelength range of 360 nm to 400 nm.

15. The method according to claim 1, wherein the specific wavelength region includes a wavelength of approximately 380 nm.

16. The method according to claim 1, wherein the light is either irradiated continuously or made to pulse at a specific blinking frequency.

17. The method according to claim 16, wherein the blinking frequency is in a range of 30 Hz to 150 Hz.

18. The method according to claim 16, wherein the blinking frequency is in a range of 35 Hz to 60 Hz.

19. The method according to claim 16, wherein the blinking frequency is 40 Hz.

20. The method according to claim 1, wherein the light is irradiated during daytime.

21. The method according to claim 1, wherein the light is irradiated for one hour or more.

22. The method according to claim 1, wherein the light is irradiated such that an irradiance of light incident on eyes of a domesticated animal is within a range of 0.5 µW/cm² to 5000 µW/cm².

23. The method according to claim 1, wherein the light is irradiated for one hour or more.

24. The method according to claim 1, wherein the light irradiating apparatus is spectacles with a light source, a spectacle frame with a light source, or a goggle with a light source, a desktop light source, a mobile terminal mounted light source, a light source installed nearby or in front of face, a portable light source, an indoor lighting, a desk lamp, or a rearing machine with a light source.

25. An apparatus for improving physiological state of domesticated animal by irradiating a domesticated animal with light of a specific wavelength region to a domesticated animal.

26. The apparatus according to claim 25, comprising:
a light source which irradiates the light of a specific wavelength region,
wherein the light source irradiates light of a specific wavelength region continuously or at a specific blinking frequency.

27. The apparatus according to claim 25, further comprising:
a controller which controls emission of light.

28. The apparatus according to claim 27, wherein the controller, by tranceiving to and from an isolated controller such as a portable terminal, carries out control by changing an irradiation condition selected from blinking frequency of the light of a specific wavelength region, irradiance, irradiation-start time, and irradiation-end time.

29. The apparatus according to claim 25, comprising:
a light source which irradiates the light of a specific wavelength region; and
a driving circuit which drives the light source.

30. The apparatus according to claim 29, wherein the driving circuit includes at least one processor which is communicably connected to at least one memory and the light source, and at least one memory for storing commands executable by the processor.

31. The apparatus according to claim 25, wherein the improvement in physiological state of a domesticated animal contributes to a purpose of rearing a domesticated animal.

32. The apparatus according to claim 25, wherein the improvement in physiological state of a domesticated animal is selected from a group consisting of prolongation of life span of a domesticated animal, an improvement in activity of a domesticated animal, an improvement in visual appearance of a domesticated animal, and an improvement in physiology of a domesticated animal.

33. The apparatus according to claim 32, wherein the prolongation of life span of a domesticated animal is prolongation of life span of a domesticated animal in healthy condition.

34. The apparatus according to claim 32, wherein the improvement in activity of a domesticated animal is an improvement in amount or quality of activity of a domesticated animal.

35. The apparatus according to claim 32, wherein the improvement in activity of a domesticated animal is selected from a group consisting of an improvement in walk of a domesticated animal, an improvement in activity during wakefulness of a domesticated animal, an improvement in activity during daytime of a domesticated animal, an improvement in activity during nighttime of a domesticated animal, an improvement in sleep of a domesticated animal, and an improvement in yield from a domesticated animal.

36. The apparatus according to claim 35, wherein the improvement in activity during wakefulness of a domesticated animal is an improvement in waking hours of a domesticated animal.

37. The apparatus according to claim 35, wherein the improvement in yield from a domesticated animal is an improvement in quantity or quality of yield from a domesticated animal.

38. The apparatus according to claim 35, wherein the yield from a domesticated animal is selected from a group consisting of a domesticated animal itself, progenies of a domesticated animal, eggs of a domesticated animal, and milk from a domesticated animal.

39. The apparatus according to claim 32, wherein the improvement in visual appearance is selected from a group consisting of an improvement in coat of hair of a domesticated animal, an improvement in coat color of a domesticated animal, and an improvement in behavior of a domesticated animal.

40. The apparatus according to claim 32, wherein the improvement in physiology of a domesticated animal is either an improvement in brain function of a domesticated animal or an improvement in digestive function of a domesticated animal.

41. The apparatus according to claim 25, wherein the light is violet light.

42. The apparatus according to claim 25, wherein the specific wavelength region includes a wavelength range of 360 nm to 400 nm.

43. The apparatus according to claim 25, wherein the specific wavelength region includes a wavelength of approximately 380 nm.

44. The apparatus according to claim 26, wherein the blinking frequency is in a range of 30 Hz to 150 Hz.

45. The apparatus according to claim 26, wherein the blinking frequency is in a range of 35 Hz to 60 Hz.

46. The apparatus according to claim 26, wherein the blinking frequency is 40 Hz.

47. The apparatus according to claim 25, wherein the light is irradiated during daytime.

48. The apparatus according to claim 25, wherein the light is irradiated for one hour or more.

49. The apparatus according to claim 25, wherein the light is irradiated such that an irradiance of light incident on eyes of a domesticated animal is within a range of 0.5 µW/cm² to 5000 µW/cm².

50. The apparatus according to claim 25, wherein the light is irradiated for one hour or more.

51. The apparatus according to claim 25, wherein the apparatus is spectacles with a light source, a spectacle frame with a light source, or a goggle with a light source, a desktop light source, a mobile terminal mounted light source, a light source installed nearby or in front of face, a portable light source, an indoor lighting, a desk lamp, or a rearing machine with a light source.

52. The apparatus according to claim 25, wherein light of other wavelength region, sound, vibrations, magnetic field, or electric field are applied in addition, together with irradiation of the light of a specific wavelength region.

53. A computer-readable medium which is a non-transitory computer-readable medium having commands stored therein, and which is capable of causing an apparatus including a light source which irradiates light of a specific wavelength region continuously or at a specific blinking frequency to a domesticated animal and a controller which controls the blinking frequency of the light source, to execute the following steps when a command is executed by a processor:
a step of operating the apparatus such that the controller controls the blinking frequency of the light source to 0 Hz or to a frequency in a range of 30 Hz to 150 Hz; and
a step of operating the apparatus such that the light source irradiates light of a wavelength region in a range of 360 nm to 400 nm to a domesticated animal.

54. An instrument for improving physiological state of domesticated animal by light stimulation, comprising:
a glass, a spectacle lens, or a contact lens which allows violet light to pass through.

55. A component which is built-in or attached to an apparatus according to claim 25, and which is replaceable.

56. A component which is built-in or attached to an instrument according to claim 54, and which is replaceable.

57. A system which replaces, repairs, or carries out maintenance of an apparatus according to claim 25.

58. A system which replaces, repairs, or carries out maintenance of an instrument according to claim 54.

59. A system which replaces, repairs, or carries out maintenance of a component according to claim 55 or claim 56.

60. A method for replacing, repairing, or carrying out maintenance of an apparatus according to claim 25.

61. A method for replacing, repairing, or carrying out maintenance of an instrument according to claim 54.

62. A method for replacing, repairing, or carrying out maintenance of a component according to claim 55 or claim 56.
